# EUROPEAN PATENT SPECIFICATION

(11) **EP 3 934 867 B1**
(45) Date of publication and mention of the grant of the patent: **06.11.2024**
(21) Application number: 20712705.1
(22) Date of filing: 09.03.2020
(51) Int. Cl.: B26D 9/00, B23B 39/00, B26D 11/00, B23P 23/02, B23P 23/04, B25H 7/04, B23K 10/00, B23K 26/08, B23K 26/38, B23K 26/382, B23K 37/04, B41J 3/28, B41J 3/407

(54) **A SHEET PROCESSING MACHINE AND A METHOD FOR PROCESSING FLAT WORKPIECES**
MASCHINE UND VERFAHREN ZUR BEARBEITUNG VON PLATTEN
DISPOSITIF ET MÉTHODE POUR L'USINAGE DES PIÈCES PLATES

(30) Priority: 08.03.2019 NL 2022696
(43) Date of publication of application: 12.01.2022
(73) Proprietor: Voortman Steel Machinery Holding B.V., 7463 PK Rijssen (NL)
(72) Inventor: SCHREUR, Joey Jacobus, 7463 PK Rijssen (NL)
(74) Representative: V.O.
(86) International application number: PCT/NL2020/050156
(87) International publication number: WO 2020/185077

(56) References cited:
- EP-A2- 0 470 350
- EP-A2- 0 470 350
- WO-A1-2007/042905
- WO-A1-2009/141708
- WO-A1-2009/141708
- DE-A1- 19 620 391
- VOORTMANMACHINERY: "CNC Heavy Plate Drilling, Cutting And Milling | Voortman V325 | Steel Fabrication", YOUTUBE, 6 November 2017 (2017-11-06), pages 1, XP054980113, Retrieved from the Internet <URL:https://www.youtube.com/watch?v=8qg3qn9OPrM> [retrieved on 20200116]
- VOORTMANMACHINERY: "CNC Heavy Plate Drilling, Cutting And Milling | Voortman V325 | Steel Fabrication", YOUTUBE, 6 November 2017 (2017-11-06), pages 1, XP054980113, Retrieved from the Internet <URL:https://www.youtube.com/watch?v=8qg3qn9OPrM> [retrieved on 20200116]

## Description

### FIELD

The invention relates to a sheet processing machine and a method for processing sheet material.

### BACKGROUND

Sheet processing machines, cut, drill or otherwise process the provided sheet material according to the operator's wishes. An example of such a machine is the Voortman V325. A short movie clip of the V325 can be found on YouTube.com after entering the search term "CNC Heavy Plate Drilling, Cutting And Milling Voortman 325 Steel Fabrication". In said machine the sheet material is positioned by two separate side grippers. These grippers provide x-axis motion, e.g. during drilling and contour cuts. The machine is further provided with a spindle and a plasma cutter both of which are movable along the y-axis, perpendicular to the x-axis. The spindle can contain different processing heads, e.g. for drilling or milling. These processing heads can be automatically exchanged. The combined movement of sheet material with the grippers along the x-axis and the movement of the spindle or plasma cutter along the y-axis, provide the required relative movability of the sheet material on the one hand and the spindle and/or plasma cutter on the other hand to preform the processing operation or operations.

In order to distinguish between the multiple workpieces made, a sheet processing machine usually can also mark the workpiece, thus enabling distinction between different workpieces which have been processed. In the Voortman V325 e.g. a small mill can be used to mark the workpiece. This small mill can be placed in the spindle and can subsequently mark the required markings on the workpiece. The Voortman V325 is considered to be the closest prior art.

WO2007/042905 discloses a working machine having a work plane over which one or more bridges extends in a transverse X-direction and which a moveable above and along the work plane in a longitudinal Y-direction. The workpiece to be machined or cut is stationary positioned on a work plane. Each bridge may carry a cutting head which may carry a tool that is moveably arranged along a Z-direction or which may be moveable in three dimensions e.g. Z-direction and rotation around a horizontal and a vertical axis. The tools may include various type of cutting tools and/or milling tools. A similar disclosure is provided by WO2009/141708 be it that the machine in WO2009/141708 is for machining wood components.

### SUMMARY OF THE INVENTION

It is an object of the invention is to provide a sheet processing machine with a reduced amount of time needed for marking.

To that end, the invention provides a sheet processing machine according to claim 1. More particular, the invention provides a sheet processing machine provided with a stationary frame, a processing tool for processing on a sheet material, a marking tool for marking on the sheet material, and a XY-guide assembly. The stationary frame comprises a transport table for transporting and supporting the sheet material. The transport table comprises a roller conveyor comprising a plurality of rollers, and a gap between two of the plurality of rollers. The transport table has a transportation plane in which plane, in operation, the sheet material is moved. The transportation plane is a substantially horizontal plane so that the sheet material is oriented substantially horizontally. The processing tool is arranged at a first side of the transportation plane, that is above the transportation plane, such that, in operation, the processing tool processes at a first side of the sheet material. The first side of the sheet material is an upwardly directed side of the sheet material. The marking tool is arranged at a second side of the transportation plane, that is below the transportation plane, such that, in operation, the marking tool marks at a second side of the sheet material, opposite the first side. The second side of the sheet material is a downwardly directed side of the sheet material. The XY-guide assembly is arranged in or at the gap at the second side of the transportation plane, that is below the transportation plane, and connects the marking tool to the stationary frame and enables a movement of the marking tool with respect to the stationary frame. The marking tool extends upwardly in the gap towards the sheet material and is movable with respect to the stationary frame along an X-direction parallel to a transport direction of the roller conveyor and along a Y-direction perpendicular to the X-direction and parallel to the transportation plane. The movement of the marking tool with respect to the stationary frame is independently controllable relative to a movement of the processing tool with respect to the stationary frame.

The invention provides a sheet processing machine with a marking tool in addition to a processing tool. By virtue of the XY-guide assembly, this marking tool can be moved with respect to the sheet material, irrespective of a movement of the processing tool with respect to the sheet material. These two features combined make it possible for the sheet processing machine to mark the sheet material simultaneously to processing, e.g. drilling of the sheet material. This means no extra time is needed for marking, it can be done whilst the sheet processing machine performs another processing operation such as drilling, milling or cutting and thus while moving the sheet of material back and forth in X direction over the roller conveyor. Thus marking "on the fly" is possible, i.e. during movement of the sheet material in X-direction, which movement is dictated by the other processing operations such as drilling, milling or cutting. Depending on the actual processing and marking operation, on average an overall time reduction of approximately 11 % can be achieved with the sheet processing machine according to the invention with respect to the prior art sheet processing machine.

In the known prior art sheet processing machine, the processing tool and the plasma cutter are both arranged above the transportation plane, i.e. at one side of thereof. The processing tool of the present invention is arranged at the first side of the transportation plane. If the marking tool would also be arrange at the first side of the transportation plane, both tools would require to be placed at a sufficient distance from each other in order not to interfere with each others movements. In order to accommodate a marking tool at the first side of the transportation plane, the sheet processing machine would need to be made bigger than it would need to be without the marking tool. Instead, the marking tool of the present invention is arranged at the second side of the transportation plane such that it operates at an opposite side of the sheet material than the processing tool. This means that the movement of the marking tool by virtue of the XY-table is not interfered by movement of the processing tool. In the present invention there is no need to accommodate the marking tool next to the processing tool and the marking tool can be accommodated within the sheet processing machine which can have the same dimensions as a sheet processing machine without a marking tool according to the invention. By virtue of placement of the marking tool at the second side of the transportation plane, the sheet processing machine can thus be build more compact.

The invention further provides a method for processing sheet material according to claim 11 . More particular, the invention provides a method for processing sheet material, comprising providing a sheet processing machine according to the invention, providing a sheet material to be processed, transporting the sheet material in an X-direction to a processing position, processing the sheet material at a first side of the sheet material with the processing tool, optionally while moving the sheet material back and/or forth along the X-direction, and marking the sheet material simultaneously with the processing at a second side of the sheet material opposite the first side thereof. Herein, the first side is an upwardly directed side and the second side is a downwardly directed side of the sheet material and the sheet material (S) is oriented substantially horizontally.

The effects and the advantages of the method for processing sheet material according to the invention are the same as the effects and advantages of the sheet processing machine according to the invention.

The present invention will be further elucidated with reference to figures of an example in which various embodiment of the invention are incorporated. The embodiments may be combined or may be applied separately from each other.

### BRIEF DESCRIPTION OF THE FIGURES

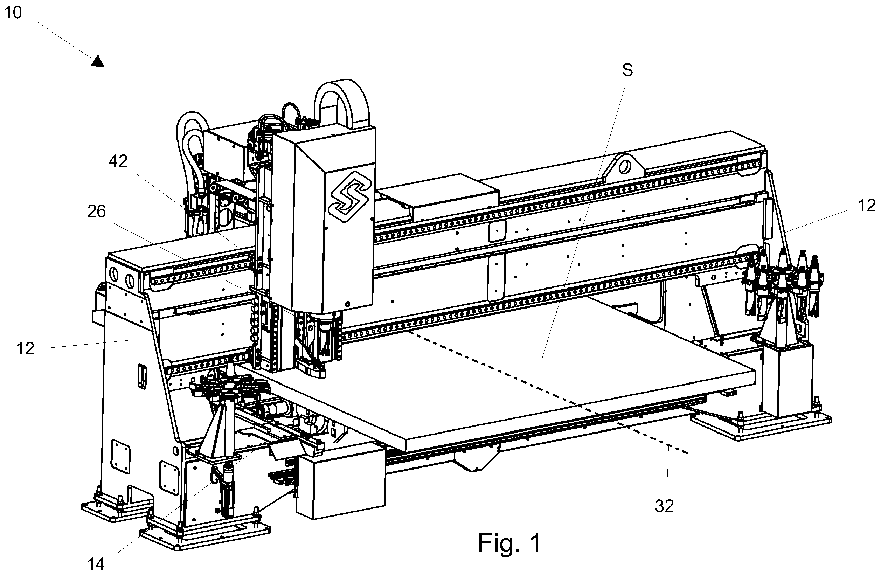

Fig. 1 shows a front/side/top perspective view of an example of a sheet processing machine according to the invention, provided with a sheet material.

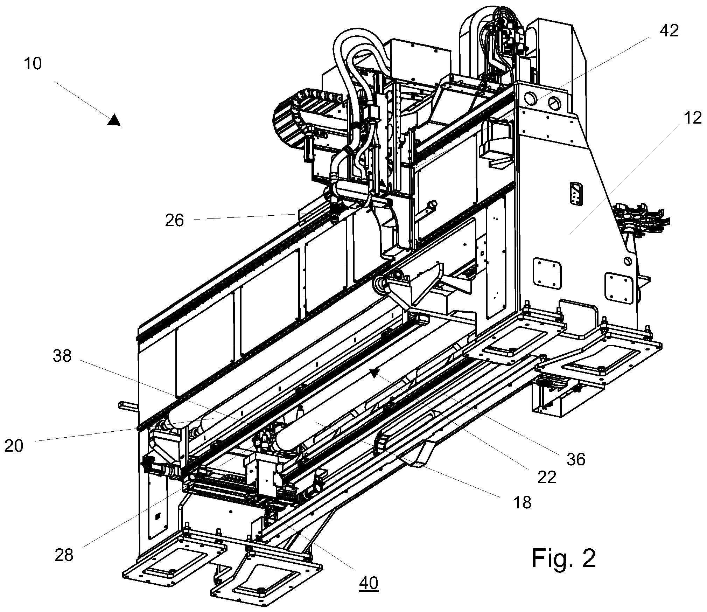

Fig. 2 shows rear/side/bottom perspective view of the example of Fig. 1, without the sheet material.

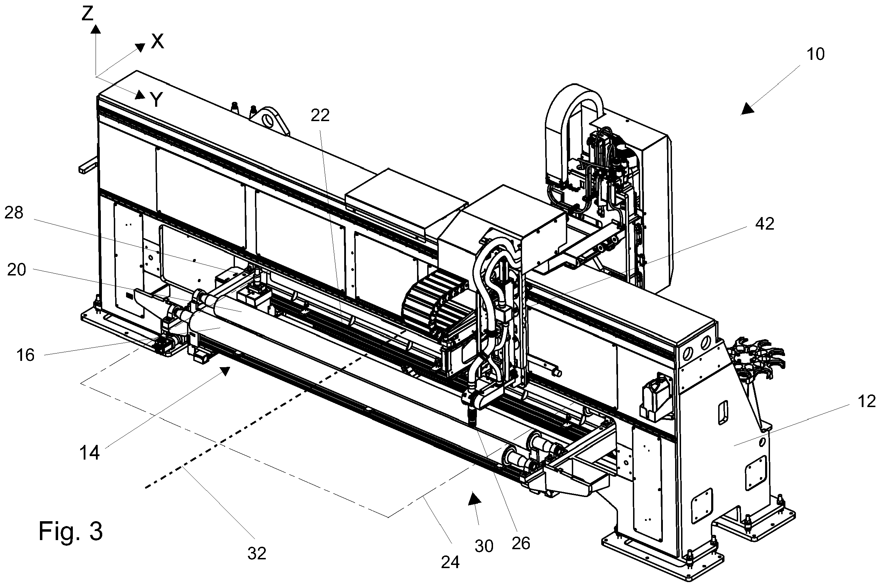

Fig. 3 shows a rear/side/top perspective view of the example of Figs. 1 and 2.

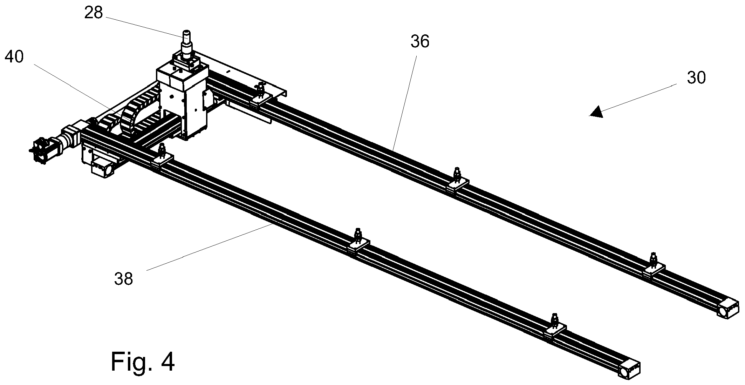

Fig. 4 shows the XY-guide assembly of the example shown in Fig. 3, without the rest of the sheet processing machine.

### DETAILED DESCRIPTION OF THE FIGURES

In this application similar or corresponding features are denoted by similar or corresponding reference signs. The description of the various embodiments is not limited to the examples shown in the figures and the reference numbers used in the detailed description and the claims are not intended to limit the description of the embodiments, but are included to elucidate the embodiments by referring to the example shown in the figures.

In the most general terms, the invention relates to a sheet processing machine 10, provided with a stationary frame 12, a processing tool 26 for processing on a sheet material S, a marking tool 28 for marking the sheet material S, and a XY-guide assembly 30. The stationary frame 12 comprises a transport table 14 for transporting and supporting a sheet material S. The transport table 14 comprises a roller conveyor 16 comprising a plurality of rollers 18, 20, and a gap 22 between two of the plurality of rollers 18, 20. The transport table 14 has a transportation plane 24 in which plane 24, in operation, the sheet material S is moved. The processing tool 26 is arranged at a first side of the transportation plane 24 such that, in operation, the processing tool 26 processes at a first side of the sheet material S. The marking tool 28 is arranged at a second side of the transportation plane 24 such that, in operation, the marking tool 28 marks at a second side of the sheet material S, opposite the first side. The XY-guide assembly 30 is arranged in or at the gap 22 at the second side of the transportation plane 24 and connects the marking tool 28 to the stationary frame 12 and enables a movement of the marking tool 28 with respect to the stationary frame 12. The marking tool 28 is movable with respect to the stationary frame 12 along an X-direction parallel to a transport direction 32 of the roller conveyor 16 and along a Y-direction perpendicular to the X-direction and parallel to the transportation plane 24. The movement of the marking tool 28 with respect to the stationary frame 12 is independently controllable relative to a movement of the processing tool 26 with respect to the stationary frame 12.

The transportation plane 24 is a substantially horizontal plane. The marking tool 28 extends upwardly in the gap 22 towards the sheet material S.

The advantage of movement in a horizontal plane is that gravity does not induce any movement on the sheet material S and need therefore not be accounted for. Since the XY-guide assembly 30 is then arranged in or under the gap 22, and since, in operation, the marking tool 28 is arranged below the sheet material S in the horizontal transportation plane 24, the best orientation of the marking tool 28 is upwards, i.e. perpendicular to the transportation plane 24. Of course, the marking tool 28 is also movable along a Z-direction perpendicular to the X-direction and to the Y-direction so that the marking tool 28 can be moved against the bottom side of the sheet material S and be spaced apart from the bottom side of the sheet material S.

In an embodiment the sheet processing machine is further comprises with a gripper, which, in operation, engages the sheet material S and is configured to move said sheet material S over the roller conveyor 16 back and forth along the X-direction.

The gripper may also engage the sheet material S when the sheet material S is placed on an infeed conveyer, and subsequently move the sheet material to and through the sheet processing machine 10. Whilst the sheet material S is placed on and supported by the roller conveyor 16, the gripper can, in operation, move the engaged sheet material S with respect to the processing tool 28 so that the processing tool 28 can preform the desired process on the sheet material S. Depending on the process to be performed this movement can be in back and forth along the X-direction 32.

In an embodiment, the XY-guide assembly 30 comprises two spaced apart guides 36, 38 which span a width of the transport table 14, and a transverse guide 40 substantially orthogonal to said two spaced apart guides 36, 38 and spanning a distance between said two guides 36, 38. The marking tool 28 is moveably mounted on the transverse guide 40 and is moveable in a longitudinal direction of the transverse guide 40. The transverse guide 40 is moveably mounted on the two spaced apart guides 36, 38 and is moveable in a longitudinal direction of the two spaced apart guides 36, 38. The two spaced apart guides 36, 38 are fixedly connected to the stationary frame 12.

Such an XY-guide assembly 30 provides a stable support for the marking tool 28. The guides 36, 38, 40 should be dimensioned rigidly enough so as to achieve the desired precision, without being influenced by the weight of the marking tool 28 as well as the forces exerted on the marking tool 28 when the marking of the sheet material S is performed.

In an embodiment, the sheet processing machine 10 further comprises a cross-guide portal 42 spanning a width of the transport table 14, wherein the processing tool 26 is moveably connected with the cross-guide portal 42 so as to be moveable back and forth along the Y-direction.

Thus, the processing tool 26 may, in operation, be moved to process along the entire width of the sheet material S. By combining the transversal movement of the processing tool 26 along cross guide portal 42 along the Y-direction with the longitudinal movement of the sheet material S, for example by means of the gripper, along the X-direction, the processing head carrying the processing tool 26 can be moved to every desired position with respect to the sheet material S to perform its processing.

In an embodiment, the processing head carrying the processing tool 26 may also be movably connected to the cross-guide portal 42 so as to be moveable along the Z-direction, i.e. perpendicular to the X-direction and the Y-direction so that the processing tool 26 can be moved towards and away from the sheet material S. In an embodiment the sheet processing machine 10 is further provided with a control system configured to control the movement of the marking tool 28 with respect to the stationary frame 12, and to operate the marking tool 28. The control system may also be configured to control the movement of the processing tool 26 with respect to the stationary frame 12, and to operate the processing tool 26. The control system may be configured to control the movement of the marking tool 28 with respect to the stationary frame 12 and/or to operate the marking tool 28 independently of and simultaneously with the controlling of the movement of the processing tool 26 with respect to the stationary frame 12 and/or the operating of the processing tool 26.

The control system provides an automation of the sheet processing machine 10. It may be part of the machine or it may be implemented in a separate computer or IC. The control system may be dedicated hardware, implemented with dedicated software. Regardless of implementation, the control system may be preloaded with instructions to perform certain actions on the sheet material S.

In an embodiment the sheet material S remains stationary during processing of the processing tool 26 on the sheet material S.

An example of a process with which the sheet material S remains stationary is drilling or sawing. The movement of the marking tool 28 with respect to the stationary frame 12 is then the same as the movement with respect to the sheet material S. Of course, it would also be possible to operate the marking tool 28 when the sheet material S moves with respect to the stationary frame 12 during processing of the processing tool 26 on the sheet material S. During such a "marking on the fly", the XY-guide assembly would need to compensate for the movement of the sheet material S with respect to the stationary frame 12.

In an embodiment the processing tool 26 may be a drill, a milling tool, a plasma cutter or a saw band. In an embodiment the marking tool 28 may be a milling tool, a drill, a laser, a powder marker, a scribing tool, or an inkjet marker. Other tools for processing or marking known in the art may also be used.

The invention also relates to a method for processing sheet material. The method comprises providing a sheet processing machine 10 according to the invention, providing a sheet material S to be processed, transporting the sheet material S in an X-direction to a processing position, processing the sheet material S at a first side of the sheet material with the processing tool 26, optionally while moving the sheet material back and/or forth along the X-direction, and marking the sheet material S simultaneously with the processing at a second side of the sheet material S opposite the first side thereof. Preferably, the first side is an upwardly directed and the second side is a downwardly directed side of the sheet material S. The sheet material S is preferably oriented substantially horizontally.

The effects and advantages of the method for processing sheet material have been described in the summary section and these effects and advantages are inserted here by reference.

The various embodiments which are described above may be implemented independently from one another and may be combined with one another in various ways. The reference numbers used in the detailed description and the claims do not limit the description of the embodiments nor do they limit the claims. The reference numbers are solely used to clarify by referring to the non-limiting example in the figures.

### Legend

10 - sheet processing machine
12 - stationary frame
14 - transport table
16 - roller conveyor
18 - roller
20 - roller
22 - gap
24 - transportation plane
26 - processing tool
28 - marking tool
30 - XY-guide assembly
32 - transport direction
36 - guide
38 - guide
40 - traverse guide
42 -cross-guide portal
S - sheet material

## Claims

1. A sheet processing machine (10), provided with
- a stationary frame (12), comprising a transport table (14) for transporting and supporting a sheet material (S), the transport table (14) comprising a roller conveyor (16) comprising a plurality of rollers (18, 20), and a gap (22) between two of the plurality of rollers (18, 20), wherein the transport table (14) has a transportation plane (24) in which plane (24), in operation, the sheet material (S) is moved, wherein the transportation plane (24) is a substantially horizontal plane so that the sheet material (S) is oriented substantially horizontally;
- a processing tool (26) for processing the sheet material (S) and arranged at a first side of the transportation plane (24), that is above the transportation plane (24), such that, in operation, the processing tool (26) processes at a first side of the sheet material (S) wherein the first side of the sheet material (S) is an upwardly directed side of the sheet material (S); **characterized in that** the sheet processing machine further comprises:
- a marking tool (28) for marking the sheet material (S) and arranged at a second side of the transportation plane (24), that is below the transportation plane (24), such that, in operation, the marking tool (28) marks at a second side of the sheet material (S), opposite the first side, wherein the second side of the sheet material (S) is a downwardly directed side of the sheet material (S); and
- a XY-guide assembly (30) arranged in or at the gap (22) at the second side of the transportation plane (24), that is below the transportation plane (24), and connecting the marking tool (28) to the stationary frame (12) and enabling a movement of the marking tool (28) with respect to the stationary frame (12),
wherein the marking tool (28) extends upwardly in the gap (22) towards the sheet material (S) and is movable with respect to the stationary frame (12) along a X-direction parallel to a transport direction (32) of the roller conveyor (16) and in a Y-direction perpendicular to the X-direction and parallel to the transportation plane (24), and wherein the movement of the marking tool (28) with respect to the stationary frame (12) is independently controllable relative to a movement of the processing tool (26) with respect to the stationary frame (12).

2. The sheet processing machine according to claim 1, further comprising a gripper, which, in operation, engages the sheet material (S) and is arranged to move said sheet material (S) over the roller conveyor (16) back and forth along the X-direction (32).

3. The sheet processing machine according to any one of the previous claims, wherein the XY-guide assembly (30) comprises two spaced apart guides (36, 38) which span a width of the transport table (14), and a transverse guide (40) substantially orthogonal to said two spaced apart guides (36, 38) and spanning a distance between said two guides (36, 38), wherein the marking tool (28) is moveably mounted on the transverse guide (40) and is moveable in a longitudinal direction of the transverse guide (40), wherein the transverse guide (40) is moveably mounted on the two spaced apart guides (36, 38) and is moveable in a longitudinal direction of the two spaced apart guides (36, 38), and wherein the two spaced apart guides (36, 38) are fixedly connected to the stationary frame (12).

4. The sheet processing machine according to any one of the previous claims, further comprises a cross-guide portal (42) spanning a width of the transport table (14), wherein the processing tool (26) is moveably connected with the cross-guide portal (42) so as to be moveable back and forth along the Y-direction.

5. The sheet processing machine according to any one of the previous claims further provided with a control system configured to control the movement of the marking tool (28) with respect to the stationary frame (12), and to operate the marking tool (28).

6. The sheet processing machine according to claim 5, wherein the control system is also configured to control the movement of the processing tool (26) with respect to the stationary frame (12), and to operate the processing tool (26).

7. The sheet processing machine according to claim 6, wherein the control system is configured to control the movement of the marking tool (28) with respect to the stationary frame (12) and/or to operate the marking tool (28) independently of and simultaneously with the controlling of the movement of the processing tool (26) with respect to the stationary frame (12) and/or the operating of the processing tool (26).

8. The sheet processing machine according to any one of the previous claims, wherein the sheet material (S) remains stationary during processing of the processing tool (26) on the sheet material (S).

9. The sheet processing machine according to any one of the previous claims, wherein the processing tool (26) is a drill, a milling tool, a plasma cutter or a saw band.

10. The sheet processing machine according to any one of the previous claims, wherein the marking tool (28) is a milling tool, a drill, a laser, a powder marker, a scribing tool, or an inkjet marker.

11. A method for processing sheet material, comprising:
- providing a sheet processing machine (10) according to any one of the previous claims;
- providing a sheet material (S) to be processed;
- transporting the sheet material (S) in an X-direction to a processing position,
- processing the sheet material (S) at a first side of the sheet material with the processing tool (26), optionally while moving the sheet material back and/or forth along the X-direction; and
- marking the sheet material (S) simultaneously with the processing at a second side of the sheet material (S) opposite the first side thereof, wherein the first side is an upwardly directed side and the second side is a downwardly directed side of the sheet material (S), wherein the sheet material (S) is oriented substantially horizontally.

## Patentansprüche

1. Plattenbearbeitungsmaschine (10), die versehen ist mit
- einem stationären Rahmen (12), der einen Transporttisch (14) zum Transportieren und Tragen eines Plattenmaterials (S) umfasst, wobei der Transporttisch (14) einen Rollenförderer (16) umfassend eine Vielzahl von Rollen (18, 20) umfasst, und einen Spalt (22) zwischen zwei der mehreren Rollen (18, 20) umfasst, wobei der Transporttisch (14) eine Transportebene (24) aufweist, in welcher Ebene (24) das Plattenmaterial (S) im Betrieb bewegt wird, wobei die Transportebene (24) eine im Wesentlichen horizontale Ebene ist, so dass das Plattenmaterial (S) im Wesentlichen horizontal ausgerichtet ist;
- ein Bearbeitungswerkzeug (26) zum Bearbeiten des Plattenmaterials (S) und das an einer ersten Seite der Transportebene (24), d. h. oberhalb der Transportebene (24), derart angeordnet ist, dass das Bearbeitungswerkzeug (26) im Betrieb an einer ersten Seite des Plattenmaterials (S) bearbeitet, wobei die erste Seite des Plattenmaterials (S) eine nach oben gerichtete Seite des Plattenmaterials (S) ist;
**dadurch gekennzeichnet, dass** die Plattenbearbeitungsmaschine ferner umfasst:
- ein Markierungswerkzeug (28) zum Markieren des Plattenmaterials (S) und das an einer zweiten Seite der Transportebene (24), d. h. unterhalb der Transportebene (24), derart angeordnet ist, dass das Markierungswerkzeug (28) im Betrieb auf einer zweiten, der ersten Seite gegenüberliegenden Seite des Plattenmaterials (S) markiert, wobei die zweite Seite des Plattenmaterials (S) eine nach unten gerichtete Seite des Plattenmaterials (S) ist; und
- eine XY-Führungsbaugruppe (30), die in oder an dem Spalt (22) auf der zweiten Seite der Transportebene (24), d. h. unterhalb der Transportebene (24), angeordnet ist, und das Markierungswerkzeug (28) mit dem stationären Rahmen (12) verbindet und eine Bewegung des Markierungswerkzeugs (28) in Bezug auf den stationären Rahmen (12) ermöglicht,
wobei sich das Markierungswerkzeug (28) in dem Spalt (22) nach oben in Richtung des Plattenmaterials (S) erstreckt und in Bezug auf den stationären Rahmen (12) entlang einer X-Richtung parallel zu einer Transportrichtung (32) des Rollenförderers (16) und in einer Y-Richtung senkrecht zu der X-Richtung und parallel zu der Transportebene (24) bewegbar ist, und wobei die Bewegung des Markierungswerkzeugs (28) in Bezug auf den stationären Rahmen (12) unabhängig von einer Bewegung des Bearbeitungswerkzeugs (26) in Bezug auf den stationären Rahmen (12) steuerbar ist.

2. Plattenbearbeitungsmaschine nach Anspruch 1, die ferner einen Greifer umfasst, der im Betrieb das Plattenmaterial (S) ergreift und so angeordnet ist, dass er das Plattenmaterial (S) über den Rollenförderer (16) entlang der X-Richtung (32) hin und her bewegt.

3. Plattenbearbeitungsmaschine nach einem der vorhergehenden Ansprüche, wobei die XY-Führungsbaugruppe (30) zwei voneinander beabstandete Führungen (36, 38) umfasst, die eine Breite des Transporttisches (14) überspannen, und eine Querführung (40), die im Wesentlichen orthogonal zu den beiden beabstandeten Führungen (36, 38) verläuft und einen Abstand zwischen den beiden Führungen (36, 38) überspannt, wobei das Markierungswerkzeug (28) beweglich an der Querführung (40) angebracht ist und in einer Längsrichtung der Querführung (40) beweglich ist, wobei die Querführung (40) beweglich an den beiden beabstandeten Führungen (36, 38) angebracht ist und in einer Längsrichtung der beiden beabstandeten Führungen (36, 38) bewegbar ist, und wobei die beiden voneinander beabstandeten Führungen (36, 38) fest mit dem stationären Rahmen (12) verbunden sind.

4. Plattenbearbeitungsmaschine nach einem der vorhergehenden Ansprüche, ferner umfassend ein Q_{uerführungsportal} (42), das sich über eine Breite des Transporttisches (14) erstreckt, wobei das Bearbeitungswerkzeug (26) beweglich mit dem Querführungsportal (42) verbunden ist, so dass es entlang der Y-Richtung hin- und herbewegt werden kann.

5. Plattenbearbeitungsmaschine nach einem der vorhergehenden Ansprüche, die ferner mit einem Steuersystem ausgestattet ist, das so konfiguriert ist, dass es die Bewegung des Markierungswerkzeugs (28) in Bezug auf den stationären Rahmen (12) steuert und das Markierungswerkzeug (28) betreibt.

6. Plattenbearbeitungsmaschine nach Anspruch 5, wobei das Steuersystem auch so konfiguriert ist, dass es die Bewegung des Bearbeitungswerkzeugs (26) in Bezug auf den stationären Rahmen (12) steuert und das Bearbeitungswerkzeug (26) betreibt.

7. Plattenbearbeitungsmaschine nach Anspruch 6, wobei das Steuersystem so konfiguriert ist, dass es die Bewegung des Markierungswerkzeugs (28) in Bezug auf den stationären Rahmen (12) steuert und/oder das Markierungswerkzeug (28) unabhängig von und gleichzeitig mit der Steuerung der Bewegung des Bearbeitungswerkzeugs (26) in Bezug auf den stationären Rahmen (12) und/oder den Betrieb des Bearbeitungswerkzeugs (26) betreibt.

8. Plattenbearbeitungsmaschine nach einem der vorhergehenden Ansprüche, wobei das Plattenmaterial (S) während der Bearbeitung des Bearbeitungswerkzeugs (26) auf dem Plattenmaterial (S) stationär bleibt.

9. Plattenbearbeitungsmaschine nach einem der vorhergehenden Ansprüche, wobei das Bearbeitungswerkzeug (26) ein Bohrer, ein Fräswerkzeug, ein Plasmaschneider oder ein Sägeband ist.

10. Plattenbearbeitungsmaschine nach einem der vorhergehenden Ansprüche, wobei das Markierungswerkzeug (28) ein Fräswerkzeug, ein Bohrer, ein Laser, ein Pulvermarker, ein Anreißwerkzeug oder ein Tintenstrahlmarker ist.

11. Verfahren zum Bearbeiten von Plattenmaterial, umfassend:
- Bereitstellen einer Plattenbearbeitungsmaschine (10) nach einem der vorhergehenden Ansprüche;
- Bereitstellen eines zu bearbeitenden Plattenmaterials (S);
- Transportieren des Plattenmaterials (S) in X-Richtung zu einer Bearbeitungsposition,
- Bearbeiten des Plattenmaterials (S) an einer ersten Seite des Plattenmaterials mit dem Bearbeitungswerkzeug (26), optional während das Plattenmaterial entlang der X-Richtung hin- und/oder herbewegt wird; und
- Markieren des Plattenmaterials (S) gleichzeitig mit der Bearbeitung an einer zweiten Seite des Plattenmaterials (S) gegenüber der ersten Seite davon, wobei die erste Seite eine nach oben gerichtete Seite und die zweite Seite eine nach unten gerichtete Seite des Plattenmaterials (S) ist, wobei das Plattenmaterial (S) im Wesentlichen horizontal ausgerichtet ist.

## Revendications

1. Machine de traitement de feuille (10) prévue avec :
- un bâti fixe (12), comprenant une table de transport (14) pour transporter et supporter un matériau en feuille (S), la table de transport (14) comprenant un transporteur à rouleaux (16) comprenant une pluralité de rouleaux (18, 20) et un interstice (22) entre deux de la pluralité de rouleaux (18, 20), dans laquelle la table de transport (14) a un plan de transport (24), dans lequel plan (24), en fonctionnement, le matériau en feuille (S) est déplacé, dans laquelle le plan de transport (24) est un plan sensiblement horizontal de sorte que le matériau en feuille (S) est orienté de manière sensiblement horizontale ;
- un outil de traitement (26) pour traiter le matériau en feuille (S) et agencé au niveau d'un premier côté du plan de transport (24) qui est au-dessus du plan de transport (24), de sorte que, en fonctionnement, l'outil de traitement (26) réalise un traitement au niveau d'un premier côté du matériau en feuille (S), dans laquelle le premier côté du matériau en feuille (S) est un côté dirigé vers le haut du matériau en feuille (S) ;
**caractérisée en ce que** la machine de traitement de feuille comprend en outre :
- un outil de marquage (28) pour marquer le matériau en feuille (S) et étant agencé au niveau d'un deuxième côté du plan de transport (24), qui est au-dessous du plan de transport (24), de sorte que, en fonctionnement, l'outil de marquage (28) effectue un marquage, au niveau d'un deuxième côté du matériau en feuille (S), opposé au premier côté, dans laquelle le deuxième côté du matériau en feuille (S) est un côté dirigé vers le bas du matériau en feuille (S) ; et
- un ensemble de guides XY (30) agencé dans ou au niveau de l'interstice (22) au niveau du deuxième côté du plan de transport (24) qui est au-dessous du plan de transport (24) et raccordant l'outil de marquage (28) au bâti fixe (12) et permettant un mouvement de l'outil de marquage (28) par rapport au bâti fixe (12),
dans laquelle l'outil de marquage (28) s'étend vers le haut dans l'espace (22) vers le matériau en feuille (S) et est mobile par rapport au bâti fixe (12) le long d'une direction X parallèle à une direction de transport (32) du transporteur à rouleaux (16) et dans une direction Y perpendiculaire à la direction X et parallèle au plan de transport (24) et dans lequel le mouvement de l'outil de marquage (28) par rapport au bâti fixe (12) peut être commandé indépendamment par rapport à un mouvement de l'outil de traitement (26) par rapport au bâti fixe (12).

2. Machine de traitement de feuille selon la revendication 1, comprenant un outre un dispositif de préhension qui, en fonctionnement, met en prise le matériau en feuille (S) et est agencé pour déplacer ledit matériau en feuille (S) sur le transporteur à rouleaux (16) dans les deux sens le long de la direction X (32).

3. Machine de traitement de feuille selon l'une quelconque des revendications précédentes, dans laquelle l'ensemble de guides XY (30) comprend deux guides (36, 38) espacés qui couvrent une largeur de la table de transport (14) et un guide transversal (40) sensiblement orthogonal auxdits deux guides (36, 38) espacés et couvrant une distance entre lesdits deux guides (36, 38), dans laquelle l'outil de marquage (28) est monté, de manière mobile, sur le guide transversal (40) et est mobile dans une direction longitudinale du guide transversal (40), dans laquelle le guide transversal (40) est monté, de manière mobile, sur les deux guides (36, 38) espacés et est mobile dans une direction longitudinale des deux guides (36, 38) espacés et dans laquelle les deux guides (36, 38) espacés sont fixement raccordés au bâti fixe (12).

4. Machine de traitement de feuille selon l'une quelconque des revendications précédentes, comprenant en outre un portail de guide en croix (42) couvrant une largeur de la table de transport (14), dans laquelle l'outil de traitement (26) est raccordé de manière mobile avec le portail de guide en croix (42) afin d'être mobile dans les deux sens le long de la direction Y.

5. Machine de traitement de feuille selon l'une quelconque des revendications précédentes, prévue en outre avec un système de commande configuré pour commander le mouvement de l'outil de marquage (28) par rapport au bâti fixe (12) et pour actionner l'outil de marquage (28).

6. Machine de traitement de feuille selon la revendication 5, dans laquelle le système de commande est également configuré pour commander le mouvement de l'outil de traitement (26) par rapport au bâti fixe (12) et pour actionner l'outil de traitement (26).

7. Machine de traitement de feuille selon la revendication 6, dans laquelle le système de commande est configuré pour commander le mouvement de l'outil de marquage (28) par rapport au bâti fixe (12) et/ou pour actionner l'outil de marquage (28) indépendamment et simultanément avec la commande du mouvement de l'outil de traitement (26) par rapport au bâti fixe (12) et/ou au fonctionnement de l'outil de traitement (26).

8. Machine de traitement de feuille selon l'une quelconque des revendications précédentes, dans laquelle le matériau en feuille (S) reste fixe pendant que l'outil de traitement (26) effectue le traitement sur le matériau en feuille (S).

9. Machine de traitement de feuille selon l'une quelconque des revendications précédentes, dans laquelle l'outil de traitement (26) est un foret, une fraise, un dispositif de découpe au plasma ou un ruban de scie.

10. Machine de traitement de feuille selon l'une quelconque des revendications précédentes, dans laquelle l'outil de marquage (28) est une fraise, un foret, un laser, un marqueur à poudre, un outil de traçage ou un marqueur à jet d'encre.

11. Procédé pour traiter un matériau en feuille, comprenant les faits de :
- prévoir une machine de traitement de feuille (10) selon l'une quelconque des revendications précédentes ;
- prévoir un matériau en feuille (S) à traiter ;
- transporter le matériau en feuille (S) dans une direction X jusqu'à une position de traitement,
- traiter le matériau en feuille (S) au niveau d'un premier côté du matériau en feuille avec l'outil de traitement (26), facultativement tout en déplaçant le matériau en feuille vers l'avant et/ou vers l'arrière le long de la direction X ; et
- marquer le matériau en feuille (S) simultanément avec le traitement au niveau d'un deuxième côté du matériau en feuille (S) opposé à son premier côté, dans lequel le premier côté est un côté dirigé vers le haut et le deuxième côté est un côté dirigé vers le bas du matériau en feuille (S), dans lequel le matériau en feuille (S) est orienté sensiblement horizontalement.
